(19) Europäisches Patentamt
European Patent Office
Office européen des brevets

(11) **EP 4 208 040 B1**

(12) **EUROPEAN PATENT SPECIFICATION**

(45) Date of publication and mention
of the grant of the patent:
**10.04.2024 Bulletin 2024/15**

(21) Application number: **21773655.2**

(22) Date of filing: **26.08.2021**

(51) International Patent Classification (IPC):
**A23L 15/00** (2016.01)     **A23B 5/005** (2006.01)
**A23L 3/22** (2006.01)

(52) Cooperative Patent Classification (CPC):
**A23L 15/00; A23B 5/0055; A23L 3/22**

(86) International application number:
**PCT/IB2021/057809**

(87) International publication number:
**WO 2022/049461 (10.03.2022 Gazette 2022/10)**

(54) **PLANT AND PROCESS FOR THE PASTEURISATION OF EGG PRODUCTS**

ANLAGE UND VERFAHREN ZUM PASTEURISIEREN VON EIPRODUKTEN

INSTALLATION ET PROCÉDÉ DE PASTEURISATION DE PRODUITS À BASE D'OEUFS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.09.2020 IT 202000020980**

(43) Date of publication of application:
**12.07.2023 Bulletin 2023/28**

(73) Proprietor: **Sanovo Technology Italia S.R.L.**
**36035 Marano Vicentino (Vicenza) (IT)**

(72) Inventors:
• **BALASSO, Mauro**
**36035 Marano Vicentino (Vicenza) (IT)**

• **COLAVITTI, Roberto**
**36035 Marano Vicentino (Vicenza) (IT)**
• **BONATO, Paolo**
**36035 Marano Vicentino (Vicenza) (IT)**

(74) Representative: **Anselmi, Davide**
**Bugnion S.p.A.**
**Via Pancaldo, 68**
**37138 Verona (IT)**

(56) References cited:
**US-A- 3 113 872    US-A- 5 465 655**

Description

## TECHNICAL FIELD

The present invention relates to a plant for pasteurising egg products.

In particular, the invention refers to a plant for pasteurising liquid egg products, i.e. liquid products deriving from the whole shelled egg or the egg separated into its yolk and albumen components, or mixtures of egg products and other ingredients, such as salted yolk or sweetened yolk. The present invention also relates to a process for the pasteurisation of egg products.

## PRIOR ART

The pasteurisation of egg products consists in heating the product to a certain temperature, that is the pasteurisation temperature, and in maintaining the same product at this temperature for a certain time, that is the dwell time.

The purpose of the pasteurisation treatment is to kill the largest possible number of bacteria contained in the product to allow the final consumer to use and store the product in total safety as it is free of bacterial load.

Egg products are generally stored at temperatures below 4 °C and, therefore, after the dwell time the pasteurised product must be cooled again before leaving the pasteurisation plant.

Currently, the manufacturers of pasteurisation plants include the arrangement of an energy recovery section along the thermal working cycle in order to be able to limit the consumptions of thermal energy and cooling energy. Some examples of pasteurisation plants are reported in documents US3113872 and US5465655.

The energy recovery section, interposed between a duct for the inlet of the egg product inside the plant and a heating section, can be a plate or tubular heat exchanger, which in the egg product pasteurisation sector is also called direct or product-to-product type exchanger, or an interposed fluid heat exchanger, also called indirect or product-to-fluid type exchanger.

The plants with direct-type energy recovery are able to reach an energy efficiency comprised between about 80 and 85%. However, along the respective energy recovery sections the conveyed egg product more easily reaches temperatures higher than its own critical temperature (i.e. the denaturation temperature of the albumen proteins). This excessive heating causes a partial coagulation of the egg product and, consequently, that such plants are more easily subject to fouling of their own pipings. Therefore, the maximum production time is less than 5 hours.

Conversely, indirect-type plants, that is, those having intermediate fluid exchangers, usually reach an energy efficiency of maximum 75%. However, along the respective energy recovery sections the temperature of the conveyed egg product does not surpass the critical temperature value at which the proteins are denatured. It follows that these plants are less subject to fouling of their ducts and, consequently, they are able to reach production times equal to about 8-10 hours.

Currently, no known pasteurisation plant in the egg product sector is free from drawbacks that the present invention intends to overcome.

## SUMMARY

In this context, the technical task underpinning the present invention is to propose a plant and a process for the pasteurisation of egg products, which obviate the above-cited drawbacks of the prior art.

In particular, an object of the present invention is to provide a plant for pasteurising egg products capable of guaranteeing the achievement of an energy efficiency value equivalent to that of the known direct-type plants. In addition, another object of the present invention is to provide a plant for pasteurising egg products capable of guaranteeing the achievement of production times equivalent to those of the known indirect-type plants.

A further object of the present invention is to provide a plant for pasteurising egg products in which the egg products undergo a controlled pre-heating heat treatment so as to reduce, even considerably with respect to the prior art, the denaturation of proteins before the homogenisation process and, therefore, to reduce fouling of the plant.

The present invention also has the object of proposing a process for the pasteurisation of egg products characterised by the same advantages just mentioned with reference to a plant for pasteurising egg products.

The stated technical task and specified objects are substantially achieved by a plant and a process for the pasteurisation of egg products, which comprise the technical features disclosed in the respective independent claims. The dependent claims correspond to further advantageous aspects of the invention.

It should be highlighted that this summary introduces, in simplified form, a selection of concepts which will be further elaborated in the detailed description given below.

The invention relates to a plant for pasteurising egg products which comprises a first channel along which a flow of egg products to be pasteurised can be conveyed, a second channel along which a flow of pasteurised egg products can be conveyed, which is disposed consecutively to the first channel and in fluid communication therewith, a homogeniser disposed along the first channel and configured to homogenise the flow of egg products to be pasteurised and a pasteuriser member interposed between the first channel and the second channel, downstream of the homogeniser, and configured to pasteurise the homogenised flow of egg products at a pasteurisation temperature depending on the type of egg products to be pasteurised comprised between 50°C and 75°C. Preferably, the plant also comprises a thermal dwell section in which the homogenised flow of egg products is stationed for the abatement of the bacterial load present. The plant also comprises a first heat exchanger disposed along the first channel upstream of the homogeniser and configured to bring the temperature of the flow of egg products to be pasteurised to a first value comprised between 30 °C and 45 °C depending on the type of egg product to be pasteurised, and a second heat exchanger disposed along the first channel, downstream of said homogeniser, interposed between the homogeniser and the pasteuriser member, and configured to bring the temperature of the homogenised flow of egg products to be pasteurised to a second value greater than the first value and comprised between 45 °C and 60 °C. In particular, both heat exchangers are operatively interposed between respective parts of the first channel, upstream and downstream of said homogeniser, and respective parts of the second channel in order to bring about the heat exchange, by recovering part of the thermal energy of the flow of pasteurised egg products which flow along the second channel to transfer it to the flow of egg products to be pasteurised conveyed along the first channel, wherein at least one between said first and second heat exchanger is an interposed fluid exchanger and comprises a hydraulic circuit for an intermediate fluid, preferably water, which circulates between a portion of said second channel and a portion of said first channel, and wherein said hydraulic circuit comprises a system for regulating the flow rate of the intermediate fluid so as to regulate the temperature of the intermediate fluid at least at said portion of the first channel.

In other words, the plant comprises an inlet line for the raw product (i.e. not yet heat treated and generally at a temperature of about 4 °C), a homogeniser configured to homogenise the raw product and a heat recovery system, preferably with plates, disposed both upstream (at the inlet of the raw egg product) and downstream of the homogeniser (before the heating system configured to perform the pasteurisation of the egg product). In this way, the described plant is characterised by having a thermal efficiency greater than 80%. More precisely, the percentage of thermal efficiency is obtained through the following formula:

$$Thermal\ efficiency\ \% = \frac{(T_{heat\ recovery} - T_{inlet})}{(T_{pasteurisation} - T_{inlet})} \times 100$$

wherein $T_{heat\ recovery}$ is the temperature that the flow of egg products presents at the outlet of the heat recovery system, $T_{pasteurisation}$ is the temperature to which the flow of egg products is heated through the heating section, while $T_{inlet}$ is the temperature at which the flow of raw egg products is found when they are introduced into the first channel before the heat recovery system.

The temperature values reported in this summary and in the detailed description have been calculated according to the above formula and, moreover, considering an inlet temperature equal to about 4 °C and a pasteurisation temperature comprised between 50 °C and 75 °C.

If the inlet temperature of the product to the pasteuriser and the pasteurisation temperature are different, the temperatures in the energy recovery sections will change accordingly, as a function of the installed heat exchange area.

Advantageously, the energy recovery sections that define the heat recovery system (i.e. the first and the second heat exchanger) allow the raw egg product to be heated at the expense of the thermal energy released by the already pasteurised egg product that flows along the outlet line disposed downstream of the heating system and, advantageously, operatively in contact with the inlet line.

In other words, the pasteurisation plant comprises both a first heat exchanger upstream of the homogeniser and a second heat exchanger downstream of the homogeniser in order to raise the temperature of the flow of egg products to be pasteurised gradually and in a controlled manner, avoiding that at least one denaturation of the albumen proteins occurs. Generally, in fact, the egg products are stored at temperatures below 4 °C before being conveyed into the pasteurisation plants.

In this way, the first heat exchanger is able to raise the temperature of the flow of egg products (not yet homogenised) to a first value lower than the denaturation temperature of the albumen and/or yolk proteins and, at the same time, to a useful value to ensure an optimal homogenisation of yolk and albumen.

Generally, as long as the egg product is not homogenised, the albumen fraction tends to undergo denaturation, in which its own proteins tend to coagulate, at temperatures above 55 °C. In fact, in the non-homogenised egg product, the protein fraction is not protected by the fat component and, therefore, an increase in temperature beyond a critical limit value induces protein denaturation, i.e. the coagulation of the proteins, mainly those present in the albumen. Therefore, the heating induced along the channel generates a considerable fouling on the hot heat exchange wall in the rising heat recovery section. The fouling on the wall generates a decrease in the passage section and a decrease in the heat exchange efficiency of the exchanger itself. The decrease in the passage section leads to an increase in the pressures on the line, the decrease in efficiency leads to a decrease in the thermal performance compared to what is envisaged by the theoretical calculations. This phenomenon inevitably leads to a point where it will no longer be possible to proceed and the pasteuriser will have to be stopped to carry out washing operations.

Advantageously, therefore, raising the temperature of the flow of egg products to a value below 55 °C allows reducing the fouling of the first channel as the egg products do not undergo any cooking phenomenon and, consequently, cleaning and maintenance operations that would oblige the interruption of the operation of the plant are also reduced.

Following the homogenisation of the flow of egg products, albumen and yolk are completely mixed together in an indivisible way. It follows that the denaturation temperature stabilises at a value generally higher than 67 °C. In this way, the second heat exchanger is able to raise the temperature of the homogenised flow of egg products to a second value lower than the denaturation temperature and, at the same time, close to the pasteurisation temperature.

Advantageously, the use of heat exchangers that recover part of the thermal energy that the flow of pasteurised egg products has in order to transfer it to the flow of egg products to be pasteurised allows considerably reducing the consumptions of the plant and obtaining an energy efficiency greater than 80%.

In particular, the energy efficiency of the plant is calculated by dividing the difference between the temperature of the egg product at the outlet from the heat exchanger and the inlet temperature by the difference between the pasteurisation temperature and the product inlet temperature.

In the state-of-the-art pasteurisation plants which guarantee a high thermal performance, in which the heat exchange is generally direct, the incoming non-homogenised flow of egg products is in direct contact with the flow of pasteurised egg products, whose high temperature induces the coagulation of the incoming flow of egg products, considerably reducing the maximum working time and, moreover, leading to the need for numerous washing cycles with consequent costs and waste of time.

In the pasteurisation plant in accordance with the invention, the flow of pasteurised egg products (i.e. at a high temperature) that enters the first heat exchange section is at the ideal temperature to allow the incoming flow of egg products (not yet pasteurised) to be heated up to the homogenisation temperature, without generating a critical fouling on the walls of the heat exchanger. In the second heat exchange section, the product is homogenised and, therefore, it is possible to further raise the temperature of the incoming flow of egg products, avoiding fouling the channel and obtaining a higher percentage of heat recovery without running the risk of limiting the maximum production time.

Advantageously, in the case of an indirect-type heat exchanger, the intermediate water circuit allows working under a higher safety condition thanks to the interposition of an intermediate means for the heat exchange. In addition, the efficiency of the recovery section can be modulated by modulating the water flow rate of intermediate heat exchange.

In the direct heat exchange section, on the other hand, safety is guaranteed by the possibility of having a higher pressure on the pasteurised side. The invention also relates to a process for the pasteurisation of egg products which comprises the steps of:

- conveying a flow of egg products to be pasteurised along a first channel;
- bringing the temperature of the flow of egg products to be pasteurised to a first value comprised between 30 °C and 45 °C so as to avoid the denaturation of the proteins contained in the egg products;
- homogenising the flow of egg products to be pasteurised;
- bringing the temperature of a homogenised flow of egg products to be pasteurised to a second value greater than the first value and comprised between 45 °C and 60 °C;
- pasteurising the homogenised flow of egg products for a pre-established time interval and at a pasteurisation temperature depending on the type of egg products to be pasteurised comprised between 50°C and 75°C;
- conveying a pasteurised homogenised flow of egg products along a second channel;
- providing a hydraulic circuit for an intermediate fluid, preferably water, between at least part of said first channel and at least part of said second channel so as to create an interposed fluid heat exchanger;
- regulating the flow rate of the fluid conveyed inside said hydraulic circuit so as to regulate the temperature value of the intermediate fluid at least at the portion of the first channel,

wherein the step of bringing the temperature of the flow of egg products to be pasteurised to a first temperature value and the step of bringing the temperature of a homogenised flow of egg products to be pasteurised to a second temperature value are performed by means of respective heat exchangers, preferably of the plate type, disposed upstream and downstream of a homogeniser and operatively interposed between a respective part of the first channel and a respective part of the second channel to bring about the heat exchange by recovering part of the thermal energy of the flow of pasteurised egg products which flow along the second channel to transfer it to the flow of egg products to be pasteurised conveyed along the first channel.

In this way, before the yolk and albumen are homogeneously mixed, the egg products (generally stored at temperatures below 4 °C) are brought to a first temperature lower than the critical temperature in which the albumen and/or yolk proteins undergo denaturation.

At this temperature, the subsequent homogenisation step is advantageously optimised.

Finally, therefore, the temperature of the egg products is advantageously raised to a second value close to the value of the pasteurisation temperature.

Advantageously, the achievement of the first and the second temperature value of the egg products is obtained by means of respective heat exchangers which, at the same time, make the heat recovery from the flow of pasteurised egg products possible in order to optimise the thermal efficiency of the plant.

In accordance with the prior art, the pasteurisation cycles provide for a continuous heating of the egg products to a pre-established temperature value, keeping them at this temperature for a desired time interval (the so-called holding time), to subsequently cool them to a temperature value where the growth of bacteria is minimised. Preferably, the egg products are heated with hot water heated by steam (or, in some cases, with electricity), whereas the egg products are cooled with a recirculation of a medium (preferably water) having a temperature lower than that of treatment of the egg products.

However, the process for the continuous heating and cooling of the egg products would allow for energy savings (i.e. of the heating and cooling energy) by using the same heated egg products (from pasteurisation) to obtain the pre-heating of the cold egg products (i.e. those still raw and untreated), and vice versa by using raw egg products for cooling the pasteurised egg products. In other words, it would be advantageous to exploit a heat exchange between the egg products entering the plant and those (pasteurised) leaving the plant.

In accordance with the state-of-the art plants, the egg products stored at a temperature lower than or equal to 4 °C are conveyed along the pasteuriser to be heated up to about 65 °C and, therefore, are subsequently cooled again to about 4 °C. Therefore, the egg products have to be heated by about 61 °C. The thermal energy required to heat a ton of whole egg (from about 4 °C to 65 °C - considering that the whole egg has a specific heat value equal to about 0.86 kcal/[kg*K] and a density value equal to about 1.03 kg/L) is generally equal to about 61 kW, as well as the energy required for cooling the egg products themselves (to be brought back to a temperature equal to about 4 °C).

Otherwise, in accordance with the pasteurisation plant (and the relative process) described herein, the pasteurisation thermal cycle envisages that the egg products stored at 4 °C are preheated to about 53 °C thanks to the recovery of thermal energy from the inside of the plant itself, to then be heated to the desired pasteurisation temperature with an energy expenditure of about 12.5 kW (for each ton of egg products).

After pasteurisation, the egg products are cooled to about 16 °C thanks to a further recovery of thermal energy inside the plant and, finally, they are cooled to a temperature of about 4 °C with an energy expenditure substantially equal to the previous one, i.e. 12.5 kW.

## BRIEF DESCRIPTION OF THE DRAWINGS

Further characteristics and advantages of the present invention will become more apparent from the following description of a preferred, but not exclusive, embodiment of a plant for pasteurising egg products, as illustrated in the appended drawings, in which:

- Figure 1 is a schematic view of a first example of a plant for pasteurising egg products according to the prior art;
- Figure 2 is a schematic view of a second example of a plant for pasteurising egg products according to the prior art;
- Figure 3 is a schematic view of a generic plant for pasteurising egg products according to the invention;
- Figure 4 is a schematic view of a first embodiment of the plant illustrated in Figure 3;
- Figure 5 is a schematic view of a second embodiment of the plant illustrated in Figure 3.

With reference to the drawings, they serve solely to illustrate embodiments of the invention with the aim of better clarifying, in combination with the description, the inventive principles on which the invention is based.

## DETAILED DESCRIPTION

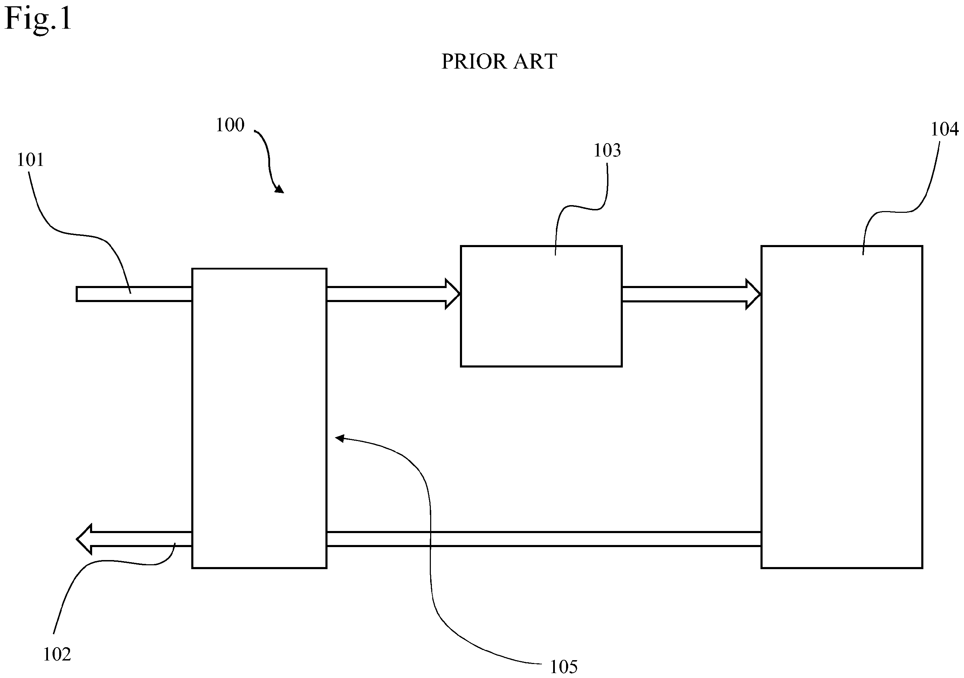

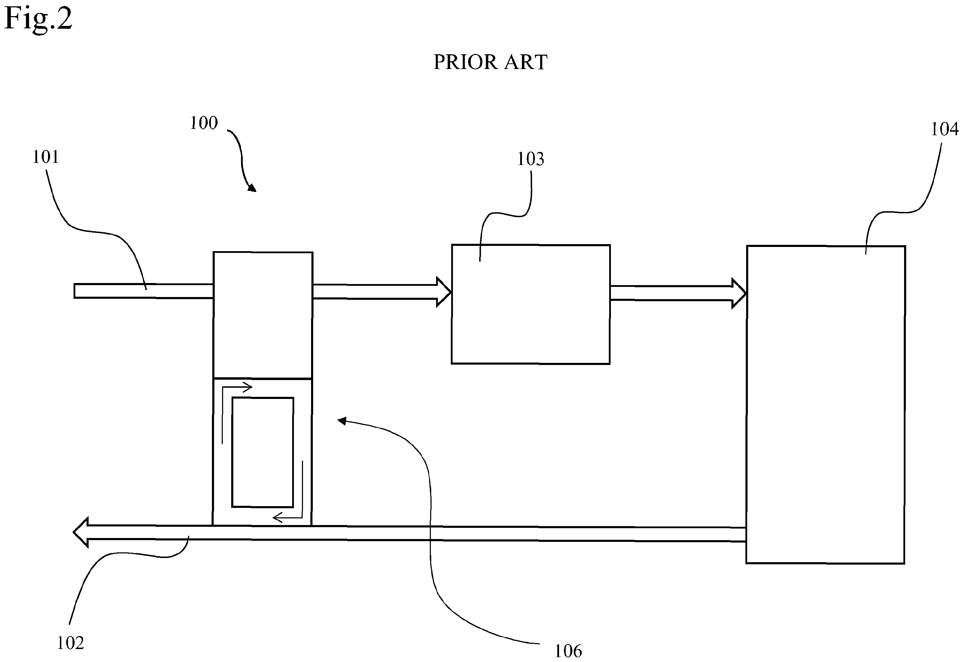

Figures 1 and 2 illustrate two examples of plants for pasteurising egg products in accordance with the prior art previously described.

In these figures, the plant for pasteurising egg products is indicated by the number 100.

In particular, each plant 100 comprises a first channel 101 for conveying a flow of egg products not yet pasteurised, a second channel 102 for conveying the flow of pasteurised egg products, a homogeniser 103 disposed along the first channel 102 for mixing at least the portions of yolk and albumen and a pasteuriser member 104 interposed between the first and the second channel 101, 102 for the pasteurisation of the flow of homogenised egg products still to be pasteurised.

In addition, both plants 100 comprise a heat exchanger 105, 106 operatively interposed between the first and the second channel 101, 102 and upstream of the homogeniser 103.

More precisely, figure 1 illustrates a plant 100 comprising a heat exchanger 105 of the product-to-product type (also called direct-type exchanger in the sector of plants for pasteurising egg products) which allows reaching an energy efficiency comprised between about 80 and 85% thanks to a direct exchange of thermal energy between the flow of pasteurised egg products and the flow of raw egg products (i.e. still to be pasteurised) by means of the direct heat exchange through the surface of the heat exchanger 105 interposed between the first and the second channel 101, 102.

However, this plant requires frequent interruptions of the production cycle to perform the necessary cleaning and maintenance interventions due to the fouling that occurs mainly at the heat exchanger 105, upstream of the homogeniser 103, due to the direct heat exchange between the non-homogenised raw egg product and the hot surface of the same heat exchanger 105, i.e. at the pasteurisation temperature. In fact, if the temperature of the egg products exceeds a critical level, the proteins of the albumen undergo denaturation which generates their solidification and, therefore, the formation of solid residues which are deposited and reduce the operation of the pasteuriser.

Otherwise, figure 2 illustrates a plant 100 comprising a heat exchanger 106 of the interposed fluid type (also called product-to-fluid or indirect-type exchanger in the sector of the plants for pasteurising egg products) which allows reaching an energy efficiency equal to about 70% since a water circuit is interposed between the first and the second channel 101, 102 which acts as a mediating element for the transfer of thermal energy between the flow of pasteurised egg products and the flow of egg products to be pasteurised.

However, this plant allows managing in a more controlled way the transfer of thermal energy to the flow of egg products to be pasteurised, which hardly reaches the critical temperature at which the denaturation of the proteins of the albumen and/or yolk takes place. It follows that the aforesaid plant is less subject to cleaning and maintenance operations and, therefore, is able to guarantee average longer operating cycles of the plant illustrated in figure 1, generally 8-10 working hours against only 4 hours.

The present invention is directed to a plant for pasteurising egg products. With reference to the figures, the plant for pasteurising egg products has been generically indicated by number 1.

The other numerical references refer to technical features of the invention which, barring indications otherwise or evident structural incompatibilities, the person skilled in the art will know how to apply to all the variant embodiments described.

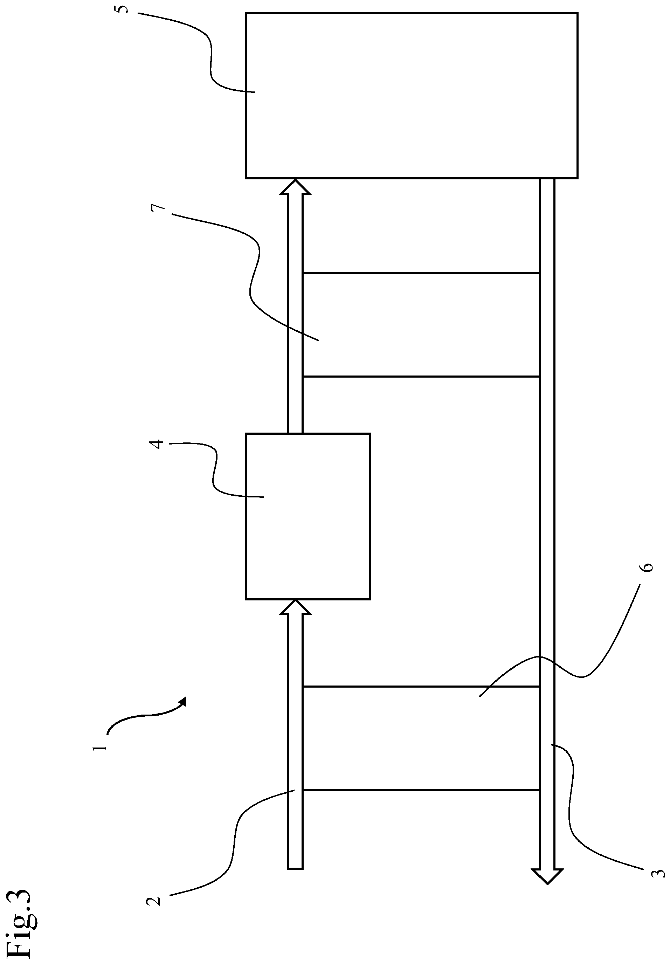

Figure 3 illustrates a generic plant 1 for pasteurising egg products which comprises a first channel 2 along which a flow of egg products to be pasteurised can be conveyed, a second channel 3 along which a flow of pasteurised egg products can be conveyed, which is disposed consecutively to the first channel 2 and in fluid communication therewith, a homogeniser 4 disposed along the first channel 2 and configured to homogenise the flow of egg products to be pasteurised and a pasteuriser member 5 interposed between the first channel 2 and the second channel 3, downstream of the homogeniser 4, and configured to pasteurise the homogenised flow of egg products at a pasteurisation temperature, comprised between 50 °C and 75 °C, depending on the type of egg products to be pasteurised. The pasteurisation temperature of an egg product varies depending on the egg components contained, in fact, it could contain only albumen, only yolk, or a combination thereof.

Generally, an egg product containing only albumen is pasteurised at a pasteurisation temperature comprised between 53 °C and 58 °C, an egg product containing only yolk is pasteurised at a pasteurisation temperature comprised between 63 °C and 68 °C, while an egg product containing both albumen and yolk is pasteurised at a pasteurisation temperature comprised between 65 °C and 70 °C.

It is known that liquid egg is composed of both albumen and yolk, which exhibit different behaviours during pasteurisation. In fact, albumen is rich in proteins that are sensitive to high temperatures and which, therefore, can be damaged during pasteurisation.

On the other hand, when albumen and yolk are mixed together to obtain liquid whole egg a mutual interference takes place. In particular, the fats present in the yolk envelop the proteins of the albumen, protecting them during the pasteurisation process. Consequently, the pasteurisation of the whole egg can take place at higher temperatures than the temperatures normally used to pasteurise the components individually without compromising, at the same time, the quality and the production time. Therefore, the egg product must be properly homogenised to allow a high pasteurisation temperature to be reached.

The plant 1 also comprises a first heat exchanger 6 and a second heat exchanger 7. In particular, the first heat exchanger 6 is disposed along the first channel 2 upstream of the homogeniser 4 and is configured to bring the temperature of the flow of egg products to be pasteurised to a first value comprised between 30 °C and 45 °C depending on the type of egg products to be pasteurised, while the second heat exchanger 7, always disposed along the first channel, is interposed between the homogeniser 4 and the pasteuriser member 5 and is configured to bring the temperature of the homogenised flow of egg products to be pasteurised to a second value greater than the first value and comprised between 45 °C and 60 °C. Both heat exchangers 6, 7 are operatively interposed between the respective parts of the first channel 2 and the respective parts of the second channel 3 in order to bring about the heat exchange.

In this way, the plant 1 has both a first heat exchanger 6 upstream of the homogeniser and a second heat exchanger 7 downstream of the same homogeniser 4.

Advantageously, the presence of two heat exchangers 6, 7 allows the temperature of the egg products to be raised (as the latter are generally stored at temperatures below 4 °C) in a controlled and gradual manner to prevent the albumen proteins from undergoing denaturation which usually involves a fouling at least at the first heat exchanger 6 and, therefore, the need to interrupt the operation of the plant 1 to perform maintenance and cleaning.

Preferably, the first heat exchanger 6 is configured to raise the temperature of the flow of egg products to a first value comprised between 39 °C and 43 °C if only yolk is contained, or to a first value comprised between 34 °C and 38 °C if only albumen is contained, or to a first value comprised between 40 °C and 44 °C if both yolk and albumen are contained.

Even more preferably, the second heat exchanger 7 is configured to raise the temperature of the flow of homogenised egg products to a second value comprised between 54 °C and 59 °C if only yolk is contained, or to a second value comprised between 45 °C and 50 °C if only albumen is contained, or to a second value comprised between 55 °C and 60 °C if both yolk and albumen are contained.

In addition, the use of two heat exchangers 6, 7 allows recovering part of the thermal energy of the flow of pasteurised egg products flowing along the second channel 3 to transfer it to the flow of egg products to be pasteurised conveyed along the first channel 2. Advantageously, therefore, the described plant 1 is capable of reaching an energy efficiency equal to or greater than 80%.

Generally, cross-contamination between untreated and pasteurised egg products must be avoided in pasteurisation plants.

Therefore, the heat exchangers can substantially be of three types able to guarantee non-contamination control: double wall heat exchangers; heat exchangers with differential pressure control; heat exchangers with indirect heat regenerative systems.

Double wall heat exchangers comprise a pair of identical plates coupled together so as to leave a free intermediate channel where any flow of egg products (treated or not) can flow following the damage to the relative plate. The energy efficiency of this type of configuration is comprised between 60% and 75%.

Heat exchangers with differential pressure control, on the other hand, are configured to keep the partial pressure of the pasteurised egg products at a higher value than that of raw, non-pasteurised egg products. In the event that one or more plates are damaged, the pasteurised egg products will flow towards the raw ones and not the other way around in order to avoid contamination of the flow of pasteurised egg products with those not yet treated. The energy efficiency for this type of configuration is generally around 80%.

Finally, heat exchangers with indirect heat regenerative systems comprise a double plate heat exchanger to keep the flow of raw egg products completely separate from the flow of those pasteurised. A fluid, preferably water, is made to flow between the two exchangers to perform a double transfer of thermal energy by heating the raw egg products and by cooling the pasteurised egg products. The energy efficiency for this type of configuration is generally comprised between 70% and 73%.

At least one between the first and the second heat exchanger 6, 7 is an interposed fluid exchanger (also called product-to-fluid exchanger or indirect-type exchanger) which comprises a hydraulic circuit 8 of an intermediate fluid, preferably water, circulating between a portion of the second channel 3 and a portion of the first channel 2.

In other words, at least in the sector of pasteurisation plants, one of the heat exchangers 6, 7 is defined as an indirect-type heat exchanger since the transfer of thermal energy involves the use of an interposed transfer medium, in particular of a fluid. More precisely, with an indirect-type heat exchanger, the exchange of thermal energy takes place between the second channel 3, in which the flow of egg products flows at the pasteurisation temperature, generally comprised between about 50 °C and 75 °C, and the first channel 2, in which the fluid of egg products to be pasteurised flows, having a temperature lower than that of pasteurisation, by interposition of a hydraulic circuit 8 which in contact with the second channel 3 tends to heat up acquiring part of the thermal energy, whereas in contact with the first channel 2 it tends to cool, releasing part of its thermal energy.

In particular, the transfer of thermal energy between the flow of pasteurised egg products and the intermediate fluid occurs by contact between the walls of the second channel 3 and the corresponding walls of the hydraulic circuit 8, while the transfer of thermal energy between the intermediate fluid and the flow of non-pasteurised egg products occurs by contact between the corresponding walls of the hydraulic circuit 8 and the walls of the first channel 2.

The hydraulic circuit 8 comprises a system for regulating the flow rate 9 of the flow of intermediate fluid so as to regulate the temperature value of the same intermediate fluid at least at the portion of the first channel 2 with which the same hydraulic circuit 8 comes into contact.

Advantageously, in fact, the temperature of the intermediate fluid is proportional to the flow rate of the hydraulic circuit 8 through which the intermediate fluid itself flows. Consequently, a reduction in the flow rate of the hydraulic circuit 8 causes a reduction in the temperature of the intermediate fluid and, therefore, a reduction in the temperature to which the flow of egg products to be pasteurised is brought.

Even more advantageously, the control over the flow rate of the hydraulic circuit allows controlling the first value of the temperature of the flow of egg products to be pasteurised so as to keep it below the value of the critical temperature at which the proteins undergo denaturation.

According to another aspect of the invention, at least one between the first and the second heat exchanger 6, 7 is a product-to-product exchanger (also called direct exchanger) configured to place at least a part of the first channel 2 in direct contact with at least a part of the second channel 3.

In other words, in the sector of pasteurisation plants, at least one of the heat exchangers 6, 7 is defined as a direct-type heat exchanger. More precisely, with a direct-type heat exchanger, the exchange of thermal energy takes place through direct contact between the second channel 3, in which the flow of egg products flows at a pasteurisation temperature generally comprised between about 50 °C and 75 °C, and the first channel 2, in which the fluid of egg products to be pasteurised flows, having a temperature lower than that of pasteurisation.

Therefore, the contact between the surfaces of the two channels 2, 3 allows the transfer of part of the thermal energy of the flow of pasteurised egg products directly to the flow of raw egg products, i.e. those still to be pasteurised.

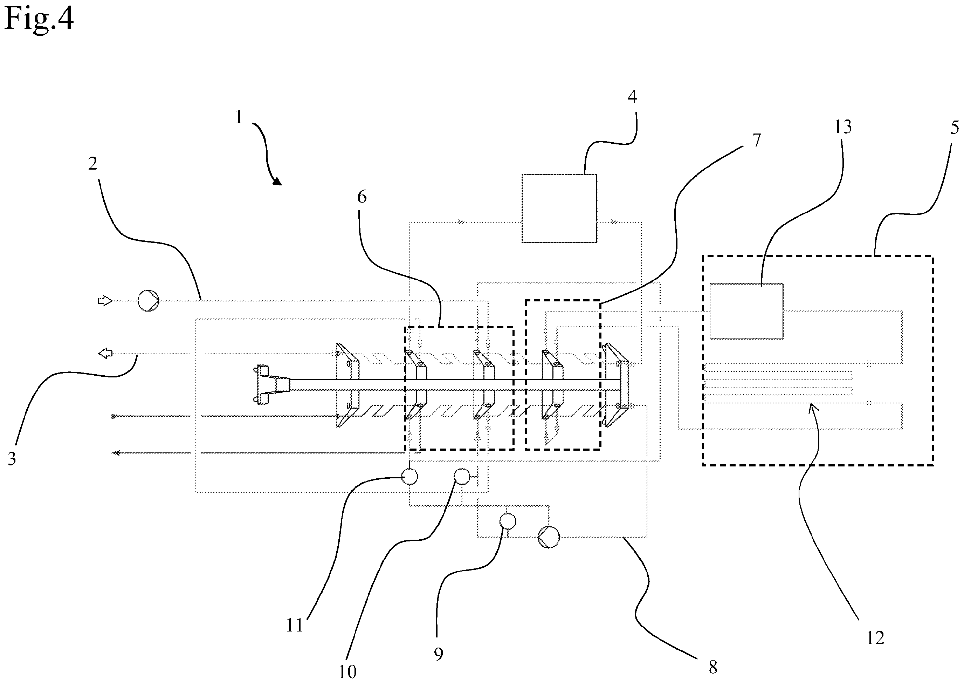

According to a further aspect of the invention illustrated in figure 4, the first heat exchanger is a product-to-product exchanger (or direct-type heat exchanger), while the second heat exchanger is an interposed fluid exchanger (or indirect-type heat exchanger).

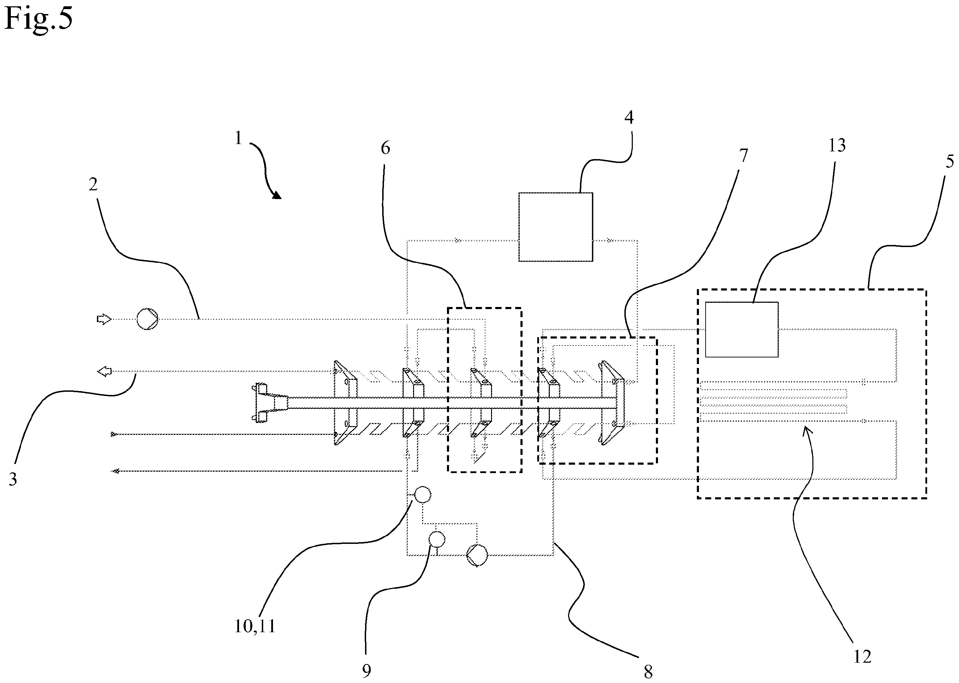

According to an alternative aspect of the invention illustrated in figure 5, the first heat exchanger is an interposed fluid exchanger (or indirect-type heat exchanger), while the second heat exchanger is a product-to-product exchanger (or direct-type heat exchanger).

Both of the aforesaid embodiments illustrated in figures 4 and 5 allow energy efficiencies equal to or greater than 80% to be reached and to considerably reduce the maintenance and cleaning operations of the plant 1 since the proteins of the egg products do not undergo denaturations and, therefore, the fouling phenomena are considerably limited. Generally, in fact, such plants 1 can be operational for about 8-10 hours consecutively. According to another aspect of the invention, the plant 1 comprises at least one temperature probe 10 disposed along the hydraulic circuit 8 and configured to detect the temperature of the intermediate fluid of the hydraulic circuit 8 upstream, relative to a direction of flow of the intermediate fluid, of a portion of the hydraulic circuit 8 that comes into contact with the portion of the first channel 2 which interacts with the same hydraulic circuit 8 to perform the heat exchange.

In this way, the temperature probe 10 is advantageously able to detect the temperature of the intermediate fluid before it passes through the portion of the hydraulic circuit 8 in contact with the portion of the first channel 2 to transfer part of its own thermal energy to the flow of egg products to be pasteurised.

According to a further aspect of the invention, the plant 1 comprises at least one critical temperature probe 11 disposed along the second channel 3, upstream of the first heat exchanger 6, and configured to detect the temperature of the homogenised flow of pasteurised egg products.

In this way, the critical temperature probe 11 is advantageously able to detect the temperature of the flow of egg products to be pasteurised before they flow along the portion of the second channel 3 in direct or indirect contact with the corresponding portion of the first channel 2 to transfer part of their thermal energy to the flow of egg products to be pasteurised.

According to an aspect of the invention, the system for regulating the flow rate 9 comprises a control unit (not illustrated) configured to:

- detect a temperature value by means of the temperature probe 10 or the critical temperature probe 11;
- compare the detected temperature value with a pre-set reference value;
- regulate the flow rate of the intermediate fluid according to a desired temperature value it is wished to reach where the temperature probe 10 or the critical temperature probe 11 is positioned so as to avoid exceeding the critical temperature.

In other words, the temperature probe 10 and the critical temperature probe 11 are connected to a control unit of the system for regulating the flow rate 9. In this way, the control unit is advantageously configured to vary the flow rate of the hydraulic circuit 8 as a function of the temperatures detected by the temperature probe 10 and/or by the critical temperature probe 11 to avoid an excessive increase in the temperature of the flow of egg products to be pasteurised at the second heat exchanger 7 and, in particular, at the first heat exchanger 6 disposed upstream of the homogeniser 4.

Figure 4 illustrates a first embodiment of the plant 1 in which the aforesaid consequential arrangement of the system for regulating the flow rate 9, of the temperature probe 10 and of the critical temperature probe 11 is clearly visible.

Alternatively, figure 5 illustrates a second embodiment of the plant 1 in which the temperature probe 10 coincides with the critical temperature probe 11 since the first heat exchanger 6 is an interposed fluid exchanger. In other words, in accordance with the second embodiment of the plant 1, the temperature probe 10 is configured to also perform the function of the critical temperature probe 11 since it is the intermediate fluid of the hydraulic circuit 8 the one that transfers part of its own thermal energy to the flow of egg products to be pasteurised.

Therefore, in the second embodiment illustrated in figure 5, the detection of the temperature of the intermediate fluid of the hydraulic circuit 8 coincides with the detection of the temperature of the flow of pasteurised egg products performed by the critical temperature probe 11 in the first embodiment illustrated in figure 4.

The system for regulating the flow rate of the interposed fluid is based on the fact that there is a flow rate that maximises the efficiency of the heat exchange, guaranteeing the maximum temperature difference between the fluids both along the first channel 2 (where the flow of non-pasteurised egg products is present) and along the second channel 3 (where the flow of pasteurised egg products is present).

Consequently, the decrease in the aforesaid optimal flow rate entails an inevitable reduction in the efficiency of the heat exchange and, therefore, the modification of the temperatures at the outlet from the respective heat exchanger.

According to an aspect of the invention, the first and/or the second heat exchanger 6, 7 are plate exchangers.

According to another aspect of the invention, the pasteuriser member 5 comprises a further heat exchanger 13 and a serpentine coil 12 along which a flow of egg products to be pasteurised can be conveyed. In particular, the further heat exchanger 13 is configured to bring the temperature of the flow of egg products to the pasteurisation temperature, comprised between 50 °C and 75 °C, while the serpentine coil 12 is configured to maintain the temperature of the flow of egg products up to the aforesaid pasteurisation temperature value and for a pre-established time interval, preferably comprised between 200 seconds and 500 seconds.

Preferably, the further heat exchanger 13 is a plate exchanger.

Even more preferably, the further heat exchanger 13 is a multi-tube exchanger which is able to guarantee a controlled variation of the temperature of the egg product and, therefore, to reduce the fouling that forms inside the same heat exchanger 13.

Generally, egg products have a dwell time (i.e. the time required to pass through the serpentine coil 12 at the pasteurisation temperature) which varies according to the components of the egg contained in the egg product itself.

Preferably, an egg product containing only yolk will pass through the serpentine coil 13 for a time interval comprised between 400 seconds and 450 seconds, whereas an egg product containing only albumen or both albumen and yolk will pass through the serpentine coil 13 for a time interval comprised between 200 seconds and 250 seconds.

The invention also refers to a process for the pasteurisation of egg products. In particular, the process for the pasteurisation of egg products comprises the steps of:

- conveying a flow of egg products to be pasteurised along a first channel;
- bringing the temperature of the flow of egg products to be pasteurised to a first value comprised between 30 °C and 45 °C so as to avoid the denaturation of the proteins contained in the egg products;
- homogenising the flow of egg products to be pasteurised;
- bringing the temperature of a homogenised flow of egg products to be pasteurised to a second value greater than the aforesaid first value and comprised between 45 °C and 60 °C;
- pasteurising the homogenised flow of egg products for a pre-established time interval, preferably comprised between 200 seconds and 500 seconds, and at a pasteurisation temperature comprised between 50 °C and 75 °C depending on the type of egg products to be pasteurised;
- conveying a pasteurised homogenised flow of egg products along a second channel 3;
- providing a hydraulic circuit 8 for an intermediate fluid, preferably water, between at least part of said first channel 2 and at least part of said second channel 3 so as to create an interposed fluid heat exchanger;
- regulating the flow rate of the fluid conveyed inside said hydraulic circuit 8 so as to regulate the temperature value of the intermediate fluid at least at the portion of the first channel 2,

wherein each step of bringing the temperature of the flow of egg products to the first and the second value is carried out by means of a respective heat exchanger, preferably a plate heat exchanger, disposed upstream and downstream of a homogeniser 4 and operatively interposed between a respective part of the first channel 2 and a respective part of the second channel 3 in order to achieve the heat exchange by recovering part of the thermal energy of the flow of pasteurised egg products which flow along the second channel 3 to transfer it to the flow of egg products to be pasteurised conveyed along the first channel 2.

In this way, before the yolk and albumen are homogeneously mixed, the egg products (generally stored at temperatures below 4 °C) are brought to a first temperature lower than the critical temperature in which the albumen and/or yolk proteins undergo denaturation.

At this temperature, the subsequent homogenisation step is advantageously optimised.

Finally, therefore, the temperature of the egg products is advantageously raised to a second value close to the value of the pasteurisation temperature.

Advantageously, the achievement of the first and the second temperature value of the egg products is obtained by means of respective heat exchangers which, at the same time, make the heat recovery from the flow of pasteurised egg products possible in order to optimise the thermal efficiency of the plant.

According to the process of the invention, the process also comprises the steps of:

- providing a hydraulic circuit 8 for an intermediate fluid, preferably water, between at least a part of the first channel 2 and at least a part of the second channel 3 so as to create an interposed fluid heat exchanger;
- regulating the flow rate of the fluid conveyed inside the hydraulic circuit 8 so as to regulate the temperature value of the same intermediate fluid at least at the portion of the first channel 2 with which the same hydraulic circuit 8 comes into contact.

In this way, an intermediate flow exchanger (also called indirect exchanger) is created, which allows the transfer of part of the thermal energy of the flow of pasteurised egg products to the flow of egg products to be pasteurised by means of an intermediate fluid.

Advantageously, by controlling the flow rate of the intermediate fluid inside the hydraulic circuit 8 it is possible to control its temperature and, at the same time, also to avoid that the first temperature value to which the flow of egg products is brought exceeds beyond the critical temperature value in which denaturation of the proteins of the albumen and/or the yolk takes place.

Preferably, the aforesaid process for the pasteurisation of egg products is implemented with the plant 1 for pasteurising egg products illustrated in figures 3-5 and previously described.

In conclusion, the plant and the related pasteurisation process described make it possible to achieve the intended objects, including:

- performing a hot homogenisation, that is when the flow of raw egg products has already been preheated to a temperature lower than the pasteurisation temperature, high enough to optimise the homogenisation process without denaturing the composition of the proteins present;
- avoiding the denaturation of the proteins, as previously mentioned, thanks to a fine control over the temperatures at which the flow of raw egg products is conducted during each step of the process and each processing of the plant (before and after homogenisation ...);

- obtaining an energy recovery equal to at least 80%, if not even higher, thanks to the fine control over the raising and lowering of the temperatures, respectively, of the raw and pasteurised egg products;
- guaranteeing the highest level of safety with reference to the possibility of cross-contamination;
- guaranteeing a maximised production time (generally greater than 8 hours) before having to carry out ordinary maintenance and cleaning operations.

## Claims

1. A plant (1) for pasteurising egg products, comprising:

   - a first channel (2) along which a flow of egg products to be pasteurised can be conveyed;
   - a second channel (3) along which a pasteurised flow of egg products can be conveyed, said second channel (3) being disposed consecutively to said first channel (2) and in fluid communication therewith;
   - a homogeniser (4) disposed along said first channel (2) and configured to homogenise the flow of egg products to be pasteurised;
   - a pasteuriser member (5) interposed between said first channel (2) and said second channel (3), downstream of said homogeniser (4), and configured to pasteurise the homogenised flow of egg products at a pasteurisation temperature depending on the type of egg product to be pasteurised comprised between 50 °C and 75 °C,

   **characterised in that** it comprises:

   - a first heat exchanger (6) disposed along said first channel (2) upstream of said homogeniser (4) and configured to bring the temperature of the flow of egg products to be pasteurised to a first value comprised between 30 °C and 45 °C, depending on the type of egg product;
   - a second heat exchanger (7) disposed along said first channel (2) downstream of said homogeniser (4), interposed between said homogeniser (4) and said pasteuriser member (5) and configured to bring the temperature of the homogenised flow of egg products to be pasteurised to a second value greater than said first value and comprised between 45 °C and 60 °C,
   wherein both heat exchangers (6, 7) are operatively interposed between respective parts of the first channel (2), upstream and downstream of said homogeniser (4), and respective parts of the second channel (3) in order to bring about the heat exchange by recovering part of the thermal energy of the flow of pasteurised egg products which flow along the second channel (3) to transfer it to the flow of egg products to be pasteurised conveyed along the first channel (2),

wherein at least one between said first and said second heat exchanger (6, 7) is an interposed fluid exchanger and comprises a hydraulic circuit (8) for an intermediate fluid, preferably water, which circulates between a portion of said second channel (3) and a portion of said first channel (2),

and wherein said hydraulic circuit (8) comprises a system for regulating the flow rate (9) of the intermediate fluid so as to regulate the temperature of the intermediate fluid at least at said portion of the first channel (2).

2. The plant (1) according to claim 1, comprising at least one temperature probe (10) disposed along said hydraulic circuit (8) and configured to detect the temperature of the intermediate fluid upstream, relative to a direction of flow of the intermediate fluid, of a portion of the hydraulic circuit (8) that comes into contact with said portion of the first channel (2) which interacts with said hydraulic circuit (8) for the heat exchange.

3. The plant (1) according to claim 1 or 2, comprising at least one critical temperature probe (11) disposed along said second channel (3) upstream of said first heat exchanger (6) and configured to detect the temperature of the homogenised flow of pasteurised egg products.

4. The plant (1) according to claim 2 or 3, wherein said system for regulating the flow rate (9) comprises a control unit configured to:

   - detect a temperature value by means of the temperature probe (10) or the critical temperature probe (11);
   - compare the detected temperature value with a pre-set reference value;
   - regulate the flow rate of the intermediate fluid according to a desired temperature value it is wished to reach where the temperature probe (10) or the critical temperature probe (11) is positioned.

5. The plant (1) according to claim 3 or 4 when it depends on claim 2, wherein said temperature probe (10) coincides with said critical temperature probe (11) when said first heat exchanger (6) is an interposed fluid exchanger.

6. The plant (1) according to any one of the preceding claims, wherein at least one between said first and said second heat exchanger (6, 7) is a product-to-product exchanger configured to place at least a part of said first channel (2) in direct contact with at least a part of said second channel (3).

7. The plant (1) according to claim 6, wherein said first heat exchanger (6) is a product-to-product exchanger and said second heat exchanger (7) is an interposed fluid exchanger, or vice versa.

8. The plant (1) according to any one of the preceding claims, wherein said first and/or second heat exchanger (7) are plate exchangers.

9. The plant (1) according to any preceding claim, wherein said pasteuriser member (5) comprises a further heat exchanger (13) and a serpentine coil (12) along which a flow of egg products to be pasteurised can be conveyed, said further heat exchanger (13) being configured to bring the temperature of the flow of egg products to said pasteurisation temperature, said serpentine coil (12) being configured to maintain the temperature of the flow of egg products at said pasteurisation temperature for a pre-established time interval.

10. A process for the pasteurisation of egg products, comprising the steps of:

   - conveying a flow of egg products to be pasteurised along a first channel (2);
   - bringing the temperature of the flow of egg products to be pasteurised to a first value comprised between 30 °C and 45 °C so as to avoid the denaturation of the proteins contained in the egg products;
   - homogenising the flow of egg products to be pasteurised;
   - bringing the temperature of a homogenised flow of egg products to be pasteurised to a second value greater than said first value, comprised between 45 °C and 60 °C;
   - pasteurising the homogenised flow of egg products for a pre-established time interval and at a pasteurisation temperature depending on the type of egg products comprised between 50 °C and 75 °C;
   - conveying a pasteurised homogenised flow of egg products along a second channel (3);
   - providing a hydraulic circuit (8) for an intermediate fluid, preferably water, between at least a part of said first channel (2) and at least a part of said second channel (3) so as to create an interposed fluid heat exchanger;

- regulating the flow rate of the fluid conveyed inside said hydraulic circuit (8) so as to regulate the temperature value of the intermediate fluid at least at the portion of the first channel (2),

wherein each step of bringing the temperature of the flow of egg products to the first and the second value is carried out by means of a respective heat exchanger, preferably a plate heat exchanger, disposed upstream and downstream of a homogeniser (4) and operatively interposed between a respective part of the first channel (2) and a respective part of the second channel (3) in order to achieve the heat exchange by recovering part of the thermal energy of the flow of pasteurised egg products which flow along the second channel (3) to transfer it to the flow of egg products to be pasteurised conveyed along the first channel (2).

**Patentansprüche**

1. Anlage (1) zum Pasteurisieren von Eiprodukten, umfassend:

   - einen ersten Kanal (2), entlang dessen ein Strom von zu pasteurisierenden Eiprodukten gefördert werden kann;
   - einen zweiten Kanal (3), entlang dessen ein pasteurisierter Strom von Eiprodukten gefördert werden kann, wobei der zweite Kanal (3) auf den ersten Kanal (2) folgend und in Fluidkommunikation mit diesem angeordnet ist;
   - einen Homogenisator (4), der entlang des ersten Kanals (2) angeordnet und ausgelegt ist, um den Strom von zu pasteurisierenden Eiprodukten zu homogenisieren;
   - ein Pasteurisierungselement (5), das zwischen dem ersten Kanal (2) und dem zweiten Kanal (3) nach dem Homogenisator (4) eingesetzt und ausgelegt ist, um den homogenisierten Strom von Eiprodukten bei einer von der Art des zu pasteurisierenden Eiprodukts abhängigen Pasteurisierungstemperatur zwischen 50 °C und 75 °C zu pasteurisieren,

   **dadurch gekennzeichnet, dass** sie Folgendes umfasst:

   - einen ersten Wärmetauscher (6), der entlang des ersten Kanals (2) vor dem Homogenisator (4) angeordnet und ausgelegt ist, um die Temperatur des Stroms von zu pasteurisierenden Eiprodukten je nach der Art des Eiprodukts auf einen ersten Wert zwischen 30 °C and 45 °C zu regeln;
   - einen zweiten Wärmetauscher (7), der entlang des ersten Kanals (2) nach dem Homogenisator (4) zwischen dem Homogenisator (4) und dem Pasteurisierungselement (5) angeordnet und ausgelegt ist, um die Temperatur des homogenisierten Stroms von zu pasteurisierenden Eiprodukten auf einen zweiten Wert zu regeln, der größer ist als der erste Wert und zwischen 45 °C and 60 °C enthalten ist,
   wobei beide Wärmetauscher (6, 7) betriebswirksam zwischen jeweiligen Teilen des ersten Kanals (2) vor und nach dem Homogenisator (4) und jeweiligen Teilen des zweiten Kanals (3) eingesetzt sind, um den Wärmetausch durch die Rückgewinnung eines Teils der Wärmeenergie des Stroms von pasteurisierten Eiprodukten, die entlang des zweiten Kanals (3) strömen, herbeizuführen und diese auf den Strom von zu pasteurisierenden Eiprodukten zu übertragen, die entlang des ersten Kanals (2) gefördert werden,
   wobei mindestens entweder der erste und/oder der zweite Wärmetauscher (6, 7) (ein) zwischengelagerte(r) Fluid-Tauscher ist/sind und einen hydraulischen Kreislauf (8) für ein Zwischenfluid, vorzugsweise Wasser, umfasst/umfassen, das zwischen einem Abschnitt des zweiten Kanals (3) und einem Abschnitt des ersten Kanals (2) zirkuliert,
   und wobei der hydraulische Kreislauf (8) ein System zur Regulierung der Durchflussmenge (9) des Zwischenfluids umfasst, sodass die Temperatur des Zwischenfluids an mindestens dem Abschnitt des ersten Kanals (2) reguliert wird.

2. Anlage (1) nach Anspruch 1, umfassend mindestens einen Temperaturfühler (10), der entlang des hydraulischen Kreislaufs (8) angeordnet und ausgelegt ist, um die Temperatur des Zwischenfluids in Bezug auf eine Strömungsrichtung des Zwischenfluids stromaufwärts eines Abschnitts des hydraulischen Kreislaufs (8) zu erfassen, der mit dem Abschnitt des ersten Kanals (2), der mit dem hydraulischen Kreislauf (8) für den Wärmetausch interagiert, in Kontakt kommt.

3. Anlage (1) nach Anspruch 1 oder 2, umfassend mindestens einen Temperaturfühler zur Messung der kritischen Temperatur (11), der entlang des zweiten Kanals (3) vor dem ersten Wärmetauscher (6) angeordnet und ausgelegt ist, um die Temperatur des homogenisierten Stroms von pasteurisierten Eiprodukten zu erfassen.

4. Anlage (1) nach Anspruch 2 oder 3, wobei das System zur Regulierung der Durchflussmenge (9) eine Steuereinheit umfasst, die ausgelegt ist, um:

- einen Temperaturwert mittels des Temperaturfühlers (10) oder des Temperaturfühlers zur Messung der kritischen Temperatur (11) zu erfassen;
- den erfassten Temperaturwert mit einem voreingestellten Referenzwert zu vergleichen;
- die Durchflussmenge des Zwischenfluids je nach einem gewünschten Temperaturwert zu regulieren, der an der Stelle erreicht werden soll, an der der Temperaturfühler (10) oder der Temperaturfühler zur Messung der kritischen Temperatur (11) positioniert ist.

5. Anlage (1) nach Anspruch 3 oder 4, wenn abhängig von Anspruch 2, wobei der Temperaturfühler (10) mit dem Temperaturfühler zur Messung der kritischen Temperatur (11) übereinstimmt, wenn der erste Wärmetauscher (6) ein zwischengelagerter Fluid-Tauscher ist.

6. Anlage (1) nach einem der vorhergehenden Ansprüche, wobei mindestens entweder der erste und/oder der zweite Wärmetauscher (6, 7) (ein) Produkt-Produkt-Tauscher ist bzw. sind, ausgelegt, um mindestens einen Teil des ersten Kanals (2) in direktem Kontakt zu mindestens einem Teil des zweiten Kanals (3) zu platzieren.

7. Anlage (1) nach Anspruch 6, wobei der erste Wärmetauscher (6) ein Produkt-Produkt-Tauscher und der zweite Wärmetauscher (7) ein zwischengelagerter Fluid-Tauscher oder umgekehrt ist.

8. Anlage (1) nach einem der vorhergehenden Ansprüche, wobei der erste und/oder der zweite Wärmetauscher (7) (ein) Plattentauscher ist/sind.

9. Anlage (1) nach einem der vorhergehenden Ansprüche, wobei das Pasteurisierungselement (5) einen weiteren Wärmetauscher (13) und eine Rohrschlange (12) umfasst, entlang derer ein Strom von zu pasteurisierenden Eiprodukten gefördert werden kann, wobei der weitere Wärmetauscher (13) ausgelegt ist, um die Temperatur des Stroms von Eiprodukten auf die Pasteurisierungstemperatur zu regeln, wobei die Rohrschlange (12) ausgelegt ist, um die Temperatur des Stroms von Eiprodukten für einen vorgegebenen Zeitraum auf der Pasteurisierungstemperatur beizubehalten.

10. Verfahren zum Pasteurisieren von Eiprodukten, umfassend die folgenden Schritte:

- Fördern eines Stroms von zu pasteurisierenden Eiprodukten entlang eines ersten Kanals (2);
- Regeln der Temperatur des Stroms von zu pasteurisierenden Eiprodukten auf einen ersten Wert zwischen 30 °C and 45 °C, sodass die Denaturierung des in den Eiprodukten enthaltenen Eiweißes vermieden wird;
- Homogenisieren des Stroms von zu pasteurisierenden Eiprodukten;
- Regeln der Temperatur eines homogenisierten Stroms von zu pasteurisierenden Eiprodukten auf einen zweiten Wert, der größer ist als der erste Wert und zwischen 45 °C and 60 °C enthalten ist;
- Pasteurisieren des homogenisierten Stroms von Eiprodukten für einen vorgegebenen Zeitraum und bei einer von der Art der Eiprodukte abhängigen Pasteurisierungstemperatur zwischen 50 °C und 75 °C;
- Fördern eines pasteurisierten, homogenisierten Stroms von Eiprodukten entlang eines zweiten Kanals (3);
- Bereitstellen eines hydraulischen Kreislaufs (8) für ein Zwischenfluid, vorzugsweise Wasser, zwischen mindestens einem Teil des ersten Kanals (2) und mindestens einem Teil des zweiten Kanals (3), sodass ein zwischengelagerter Fluidwärmetauscher geschaffen wird;
- Regulieren des Durchflusses des im hydraulischen Kreislauf (8) geförderten Fluids, sodass der Temperaturwert des Zwischenfluids zumindest am Abschnitt des ersten Kanals (2) reguliert wird,

wobei ein jeder Schritt zum Regeln der Temperatur des Stroms von Eiprodukten auf den ersten und den zweiten Wert mittels eines jeweiligen Wärmetauschers durchgeführt wird, bei dem es sich vorzugsweise um einen Plattenwärmetauscher handelt, der vor und nach einem Homogenisator (4) angeordnet und betriebswirksam zwischen einem jeweiligen Teil des ersten Kanals (2) und einem jeweiligen Teil des zweiten Kanals (3) eingesetzt ist, um den Wärmetausch durch die Rückgewinnung eines Teils der Wärmeenergie des Stroms von pasteurisierten Eiprodukten, die entlang des zweiten Kanals (3) strömen, zu bewirken und sie auf den Strom von zu pasteurisierenden Eiprodukten zu übertragen, die entlang des ersten Kanals (2) gefördert werden.

**Revendications**

1. Installation (1) de pasteurisation de produits à base d'œufs, comprenant :

   - un premier canal (2) le long duquel un flux de produits à base d'œufs à pasteuriser peut être transporté ;
   - un deuxième canal (3) le long duquel un flux de produits à base d'œufs pasteurisés peut être transporté, ledit deuxième canal (3) étant disposé consécutivement audit premier canal (2) et en communication fluidique avec celui-ci ;
   - un homogénéisateur (4) disposé le long dudit premier canal (2) et configuré pour homogénéiser le flux de produits à base d'œufs à pasteuriser ;
   - un élément pasteurisateur (5) interposé entre ledit premier canal (2) et ledit deuxième canal (3), en aval dudit homogénéisateur (4), et configuré pour pasteuriser le flux homogénéisé de produits à base d'œufs à une température de pasteurisation selon le type de produit à base d'œufs à pasteuriser, comprise entre 50 et 75 °C, **caractérisée en ce qu'**elle comprend :
   - un premier échangeur de chaleur (6) disposé le long dudit premier canal (2) en amont dudit homogénéisateur (4) et configuré pour porter la température du flux de produits à base d'œufs à pasteuriser à une première valeur comprise entre 30 et 45 °C, selon le type de produit à base d'œufs ;
   - un deuxième échangeur de chaleur (7) disposé le long dudit premier canal (2) en aval dudit homogénéisateur (4), interposé entre ledit homogénéisateur (4) et ledit élément pasteurisateur (5) et configuré pour porter la température du flux homogénéisé de produits à base d'œufs à pasteuriser à une deuxième valeur supérieure à ladite première valeur et comprise entre 45 et 60 °C,
   dans laquelle les deux échangeurs de chaleur (6, 7) sont interposés de manière fonctionnelle entre des parties respectives du premier canal (2), en amont et en aval dudit homogénéisateur (4), et des parties respectives du deuxième canal (3) afin de réaliser l'échange de chaleur en récupérant une partie de l'énergie thermique du flux de produits à base d'œufs pasteurisés qui circule le long du deuxième canal (3) pour la transférer au flux de produits à base d'œufs à pasteuriser transportés le long du premier canal (2),
   dans laquelle au moins l'un entre ledit premier et ledit deuxième échangeur de chaleur (6, 7) est un échangeur de fluide interposé et comprend un circuit hydraulique (8) pour un fluide intermédiaire, de préférence de l'eau, qui circule entre une portion dudit deuxième canal (3) et une portion dudit premier canal (2),
   et dans laquelle ledit circuit hydraulique (8) comprend un système de régulation du débit (9) du fluide intermédiaire de manière à réguler la température du fluide intermédiaire au moins en correspondance de ladite portion du premier canal (2).

2. Installation (1) selon la revendication 1, comprenant au moins une sonde de température (10) disposée le long dudit circuit hydraulique (8) et configurée pour détecter la température du fluide intermédiaire en amont, par rapport à un sens de circulation du fluide intermédiaire, d'une portion du circuit hydraulique (8) qui entre en contact avec ladite portion du premier canal (2) qui interagit avec ledit circuit hydraulique (8) pour l'échange de chaleur.

3. Installation (1) selon la revendication 1 ou 2, comprenant au moins une sonde de température critique (11) disposée le long dudit deuxième canal (3) en amont dudit premier échangeur de chaleur (6) et configurée pour détecter la température du flux homogénéisé de produits à base d'œufs pasteurisés.

4. Installation (1) selon la revendication 2 ou 3, dans laquelle ledit système de régulation du débit (9) comprend une unité de commande configurée pour :

   - détecter une valeur de température au moyen de la sonde de température (10) ou de la sonde de température critique (11) ;
   - comparer la valeur de température détectée à une valeur de référence prédéfinie ;
   - réguler le débit du fluide intermédiaire selon une valeur de température désirée que l'on souhaite atteindre à l'endroit où est positionnée la sonde de température (10) ou la sonde de température critique (11).

5. Installation (1) selon la revendication 3 ou 4, lorsqu'elle dépend de la revendication 2, dans laquelle ladite sonde de température (10) coïncide avec ladite sonde de température critique (11) lorsque ledit premier échangeur de chaleur (6) est un échangeur de fluide interposé.

6. Installation (1) selon l'une quelconque des revendications précédentes, dans laquelle au moins l'un entre ledit premier et ledit deuxième échangeur de chaleur (6, 7) est un échangeur de produit à produit configuré pour placer au moins une partie dudit premier canal (2) en contact direct avec au moins une partie dudit deuxième canal (3).

7. Installation (1) selon la revendication 6, dans laquelle ledit premier échangeur de chaleur (6) est un échangeur de produit à produit et ledit deuxième échangeur de chaleur (7) est un échangeur de fluide interposé, ou vice versa.

8. Installation (1) selon l'une quelconque des revendications précédentes, dans laquelle ledit premier et/ou deuxième échangeur de chaleur (7) sont des échangeurs à plaques.

9. Installation (1) selon l'une quelconque des revendications précédentes, dans laquelle ledit élément pasteurisateur (5) comprend un échangeur de chaleur (13) supplémentaire et un serpentin plat (12) le long duquel un flux de produits à base d'œufs à pasteuriser peut être transporté, ledit échangeur de chaleur (13) supplémentaire étant configuré pour porter la température du flux de produits à base d'œufs à ladite température de pasteurisation, ledit serpentin plat (12) étant configuré pour maintenir la température du flux de produits à base d'œufs à ladite température de pasteurisation pendant un intervalle de temps préétabli.

10. Procédé de pasteurisation de produits à base d'œufs, comprenant les étapes de :

- transporter un flux de produits à base d'œufs à pasteuriser le long d'un premier canal (2) ;
- porter la température du flux de produits à base d'œufs à pasteuriser à une première valeur comprise entre 30 et 45 °C afin d'éviter la dénaturation des protéines contenues dans les produits à base d'œufs ;
- homogénéiser le flux de produits à base d'œufs à pasteuriser ;
- porter la température d'un flux homogénéisé de produits à base d'œufs à pasteuriser à une deuxième valeur supérieure à ladite première valeur, comprise entre 45 et 60 °C ;
- pasteuriser le flux homogénéisé de produits à base d'œufs pendant un intervalle de temps préétabli et à une température de pasteurisation selon le type de produits à base d'œufs, comprise entre 50 et 75 °C ;
- transporter un flux homogénéisé de produits à base d'œufs pasteurisés le long d'un deuxième canal (3) ;
- prévoir un circuit hydraulique (8) pour un fluide intermédiaire, de préférence de l'eau, entre au moins une partie dudit premier canal (2) et au moins une partie dudit deuxième canal (3) de manière à créer un échangeur de chaleur de fluide interposé ;
- réguler le débit du fluide transporté à l'intérieur dudit circuit hydraulique (8) de manière à réguler la valeur de température du fluide intermédiaire au moins en correspondance de la portion du premier canal (2), dans lequel chaque étape consistant à porter la température du flux de produits à base d'œufs à la première et à la deuxième valeur est effectuée au moyen d'un échangeur de chaleur respectif, de préférence un échangeur de chaleur à plaques, disposé en amont et en aval d'un homogénéisateur (4) et interposé de manière fonctionnelle entre une partie respective du premier canal (2) et une partie respective du deuxième canal (3) afin de réaliser l'échange de chaleur en récupérant une partie de l'énergie thermique du flux de produits à base d'œufs pasteurisés qui circule le long du deuxième canal (3) pour la transférer au flux de produits à base d'œufs à pasteuriser transporté le long du premier canal (2).

Fig.1

PRIOR ART

EP 4 208 040 B1

# Fig.2

PRIOR ART

Fig.3

Fig.4

Fig.5

EP 4 208 040 B1

**EP 4 208 040 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3113872 A

- US 5465655 A